# EUROPEAN PATENT SPECIFICATION

(11) **EP 1 912 348 B1**
(45) Date of publication and mention of the grant of the patent: **14.01.2015**
(21) Application number: 06767879.7
(22) Date of filing: 05.07.2006
(51) Int. Cl.: H04J 1/02, H04B 1/40, H04H 20/02, H04B 7/155

(54) **RELAY TRANSMITTER APPARATUS**
RELAIS-SENDERVORRICHTUNG
TRANSMETTEUR RELAIS

(30) Priority: 04.08.2005 JP 2005227263
(43) Date of publication of application: 16.04.2008
(73) Proprietor: JAPAN RADIO CO., LTD, Mitaka-shi, Tokyo 181-8510 (JP)
(72) Inventor: MAGARIFUCHI, Masatoshi c/o JAPAN RADIO CO., LTD.,, Tokyo, 181-8510 (JP)
(74) Representative: Carpintero Lopez, Francisco
(86) International application number: PCT/JP2006/313373
(87) International publication number: WO 2007/015349

(56) References cited:
- EP-A1- 1 271 937
- EP-A2- 1 109 332
- JP-A- 2000 341 243
- JP-A- 2004 112 542
- US-A1- 2003 214 919

## Description

### TECHNICAL FIELD

The present invention relates to an apparatus for performing relay transmission of a digital television broadcasting signal.

### BACKGROUND ART

In broadcasting systems such as television broadcasting systems, a signal in the form of an electromagnetic wave is transmitted from a broadcasting station. A receiver then receives the signal transmitted from the broadcasting station and obtains image information, audio information, and so on from the received signal.

Here, with regard to a signal to be transmitted by a broadcasting station, regulations concerning a transmission power, a desired signal-to-disturbance ratio, and so on, are specified, such that information with a predetermined quality can be obtained in receivers located in a local area which is designated as a broadcasting area of the broadcasting station. However, even if a signal satisfying these regulations is transmitted by the broadcasting station, when obstructions to the electromagnetic waves are present within the broadcasting area, the electric field intensity of a signal received by the receivers becomes insufficient, so that in some areas within the broadcasting area, information with a predetermined quality cannot be obtained. Accordingly, in order to decrease such areas with a degraded quality, a relay transmitter apparatus is provided within the broadcasting area for performing relay transmission in which a signal transmitted from the broadcasting station is received, amplified, and retransmitted.

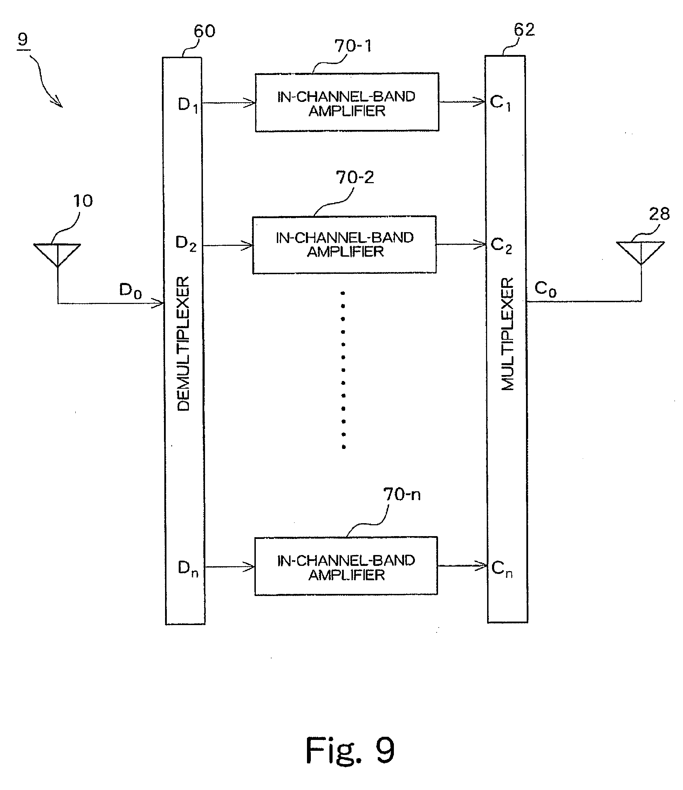

Fig. 9 shows a structure of a relay transmitter apparatus 9 which receives, amplifies, and relay-transmits a plurality of analog modulated signals occupying a plurality of channel frequency bands. Here, it is assumed that each channel frequency band is allocated to one broadcasting station. The relay transmitter apparatus 9 is formed by including a reception antenna 10, a demultiplexer 60, in-channel-band amplifier units 70-1 to 70-n, a multiplexer 62, and a transmission antenna 28.

A signal received by the reception antenna 10 is input to the demultiplexer 60 which includes one input terminal Do and n output terminals D₁ to Dₙ. A single channel frequency band is allocated to each of the output terminals D₁ to Dₙ. Each of the output terminals D₁ to Dₙ outputs a signal obtained by attenuating a signal in a frequency band out of the channel frequency band, which is contained in the signal input from the input terminal Do.

The signals output from the output terminals D₁ to Dₙ of the demultiplexer 60 are input to the corresponding in-channel-band amplifier units 70-1 to 70-n, respectively. Each of the in-channel-band amplifier units 70-1 to 70-n amplifies the input signal in the broadcasting frequency band, and then converts the amplified signal into a signal in an intermediate frequency band. Each in-channel-band amplifier unit further performs band limitation in which a signal out of the desired frequency band is attenuated, and then performs intermediate frequency amplification and conversion back into the broadcasting frequency band and amplification, and outputs the resultant signal. The signals output from the in-channel-band amplifier units 70-1 to 70-n are input to corresponding input terminals C₁ to Cₙ of the multiplexer 62. A single channel frequency band is allocated to each of the input terminals C₁ to Cₙ. The multiplexer 62 combines the signals input from the input terminals C₁ to Cₙ. In combining the signals input from the input terminals C₁ to Cₙ by the multiplexer 62, a signal in a frequency band out of the channel frequency band, which is contained in the signals input from the input terminals C₁ to Cₙ, is reduced, and a signal input from an input terminal Cᵢ (where i is any integer ranging from 1 to n) and output over to another input terminal Cⱼ (where j is any integer ranging from 1 to n, which is not i) is attenuated. A signal output from the multiplexer 62 is transmitted as ah electromagnetic wave via the transmission antenna 28.

As described above, the relay transmitter apparatus 9 shown in Fig. 9 divides an input signal into different channel frequency bands allocated to corresponding ones of a plurality of broadcasting stations, respectively, and performs band limitation, amplification, and so on, individually for each channel frequency band. This structure aims to minimize the disturbance due to intermodulation generated by mutual influences of analog modulated signals in a plurality of different channel frequency bands or the disturbance generated by noise superposed the frequency band near each channel frequency band.

An example of relay transmitter apparatus for the retransmission of digital and analogue signals is described in EP1271937A1. This relay transmitter allows the selection of at least a frequency corresponding to a digital signal on a program of digital terrestrial television and an analog signal with a plurality of frequencies on a program of analogue terrestrial television. The frequency selector preserves the analogue and digital signal band. The relay transmitter apparatus comprises a filter capable of removing at least one frequency among the plurality of frequencies, keeping at least one frequency among the plurality of frequencies and delivering the filtered signal which, in turn, is amplified and transmitted said amplified signal to digital signal receivers located in a relatively large distance from the receiving antenna. The filter further comprises a number of rejector filters, placed in series, equal to a number of carrier frequencies of vision included in the spectrum of the analog signal, each rejector filter having a rejection frequency equal to a different carrier frequency. This relay transmitter takes advantage of the fact that in the spectrum of the analog signal, there are certain frequencies that can be reissued without affecting the quality of reception. Nonetheless, the analog filters connected in cascade of this relay transmitter apparatus enable characteristic degradation in a pass frequency band that becomes larger. The approach does not provide any option of allowing the detection of a change in propagation circumstances with time of the broadcasted signals from different possible broadcasting stations and does not provide any option of considering this change to avoid frequency bands with degraded quality. Threfore, it would be desirable to achieve a transmission of digital television broadcasting signals in a reliably way which takes into account the possible changes in the allocation of the channel frequency band for digital broadcasting and allows the characteristic degradation in a pass frequency band to be decreased.

### DISCLOSURE OF THE INVENTION

In recent years, digital broadcasting in which information is transmitted by using a digitally modulated signal has been widely utilized, which has resulted in a situation in which both analog modulated signals and digital modulated signals exist. Even in such a situation, relay transmitter apparatuses which separate a plurality of channel frequency bands and amplify and relay a signal in each frequency band individually as described above are being used.

However, the above structure, which requires the in-channel-band amplifier units 70-1 to 70-n in the number n corresponding to the number of the channel frequency bands for relay transmission, has introduced a problem that the larger the number of channels, the larger the circuit scale and the higher the manufacturing cost.

The present invention was made in order to overcome the above problem of related art.

In accordance with an aspect of the present invention, there is provided a digital television broadcasting signal relay transmitter apparatus for performing relay transmission of a digital television broadcasting signal in a television broadcasting frequency band, comprising a reception unit which receives the digital television broadcasting signal; an A/D converter which converts a signal received by the reception unit into a digital signal and outputs the digital signal; a digital filter which acquires a tap coefficient which determines filter characteristics, applies filtering processing based on the filter characteristics determined by the tap coefficient to a signal output from the A/D converter, and outputs a signal obtained by the filtering processing; a D/A converter which converts a signal output from the digital filter into an analog signal; a transmission unit which transmits a signal output from the D/A converter; a channel acquisition unit which acquires a channel code which identifies a frequency band occupied by the digital television broadcasting signal; a characteristics calculation unit which obtains, based on the channel code which is acquired by the channel acquisition unit, filter characteristics in which an attenuation frequency band is provided in a frequency band which is different from a plurality of designated frequency bands, each of which is designated by the channel code; and a characteristics setting unit which generates the tap coefficient based on the filter characteristics obtained by the characteristics calculation unit and outputs the tap coefficient which is generated to the digital filter.

Further, it is preferable that, in the digital television broadcasting signal relay transmitter apparatus according to the present invention, the reception unit includes a reception antenna which receives the digital television broadcasting signal and a first frequency converter which converts a frequency of a signal received by the reception antenna and outputs a signal which is converted, and the transmission unit includes a second frequency converter which converts a frequency of a signal output from the D/A converter, and transmission means which transmits a signal output from the second frequency converter, and the first frequency converter acquires a first local oscillator signal for performing a frequency conversion processing and converts a frequency of the signal received by the reception antenna based on the first local oscillator signal, and the second frequency converter acquires a second local oscillator signal for performing frequency conversion processing and converts a frequency of the signal output from the D/A converter based on the second local oscillator signal.

Also, it is preferable that in the digital television broadcasting signal relay transmitter apparatus according to the present invention, a local oscillator which outputs the first local oscillator signal is provided, and the characteristics calculation unit determines a frequency of the first oscillator signal output from the local oscillator based on a frequency band designated by the channel code which is acquired by the channel acquisition unit.

In addition, it is preferable that in the digital television broadcasting signal relay transmitter apparatus according to the present invention, the frequency of the first local oscillator signal and the frequency of the second local oscillator signal are set to an identical frequency, the frequency band occupied by the digital television broadcasting signal received by the reception antenna and the frequency band occupied by the digital television broadcasting signal transmitted by the transmission means are set to an identical frequency band, and the digital television broadcasting relay transmitter apparatus is applied to a digital television broadcasting system which adopts an SFN system.

Further, it is preferable that, in the digital television broadcasting signal relay transmitter apparatus according to the present invention, the frequency of the first local oscillator signal and the frequency of the second local oscillator signal are set to different frequencies, and the frequency band occupied by the digital television broadcasting signal received by the reception antenna and the frequency band occupied by the digital television broadcasting signal transmitted by the transmission means are set to different frequency bands.

It is also preferable that, in the digital television broadcasting signal relay transmitter apparatus according to the present invention, the transmission unit includes a transmission antenna. It is further preferable that, in the digital television broadcasting signal relay transmitter apparatus according to the present invention, the transmission unit transmits the signal output from the D/A converter to a transmission cable. It is preferable that, in the digital television broadcasting signal relay transmitter apparatus according to the present invention, the transmission unit transmits the signal output from the D/A converter to a transmission cable of a CATV system. It is further preferable that, in the digital television broadcasting signal relay transmitter apparatus according to the present invention, the digital filter includes a characteristics adjusting unit which acquires a characteristics coefficient which determines filter characteristics independently from the tap coefficient, and applies filtering processing based on the filter characteristics determined by the characteristics coefficient to a signal to which the filtering processing based on the filter characteristics determined by the tap coefficient has been applied and outputs a signal to which the filtering processing has been applied, and the digital television broadcasting signal relay transmitter apparatus includes a characteristics estimation unit which detects a deviation of an amplitude within the frequency band occupied by a signal to which a processing by the characteristics adjusting unit has been applied and a characteristics coefficient generating unit which generates a characteristics coefficient which reduces the deviation based on a result of detection performed by the characteristics estimation unit and outputs the characteristics coefficient to the characteristics adjusting unit.

According to the present invention, even when the filter characteristics which are required are complicated, such as when a broadcasting station of an analog broadcasting system for which an area in which a digital television broadcasting signal relay transmitter apparatus is installed is designated as a broadcasting area exists, the frequency band of a signal to be relay-transmitted can be set easily. Further, it is also easy to determine the characteristics of a digital filter such that a signal transmitted from a broadcasting station for which an area in which a digital television broadcasting station signal relay transmitter apparatus is installed is not designated as a broadcasting area is not to be relay-transmitted. In addition, an advantage that the need for changing the hardware design for each area in which a digital television broadcasting signal transmitter apparatus is installed is no longer required can be achieved.

### BRIEF DESCRIPTION OF THE DRAWINGS

These and other objects of the invention will be explained in the description below, in connection with the accompanying drawings, in which:
Fig. 1 is a diagram showing a structure of a relay transmitter apparatus according to a first embodiment of the present invention;
Fig. 2 is a view showing allocation of the channel frequency bands and filter characteristics of an analog input/output filter;
Fig. 3 is a diagram showing a structure of a relay transmitter apparatus according to a second embodiment of the present invention;
Fig. 4 is a diagram showing a structure of a relay transmitter apparatus according to a third embodiment of the present invention;
Fig. 5 is a diagram showing a structure of a relay transmitter apparatus according to a fourth embodiment of the present invention;
Fig. 6 is a view showing allocation of the channel frequency bands, a process of calculating the characteristics function, and filter characteristics of a digital input/output filter;
Fig. 7 is a diagram showing a structure of a relay transmitter apparatus according to a fifth embodiment of the present invention;
Fig. 8 is a view showing an electric field intensity distribution, a frequency spectrum envelope function, a normalized frequency spectrum envelope function, and a reciprocal of a normalized frequency spectrum envelope function; and
Fig. 9 is a diagram showing a relay transmitter apparatus which relay-transmits a plurality of analog modulated signals occupying a plurality of channel frequency bands.

### BEST MODE FOR CARRYING OUT THE INVENTION

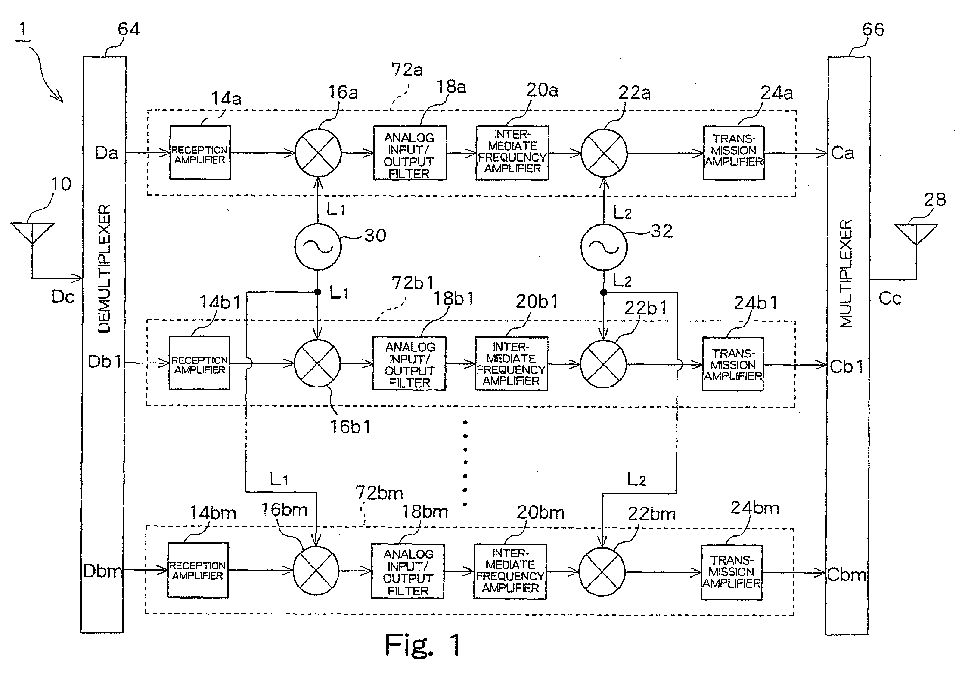

Fig. 1 shows a structure of a relay transmitter apparatus according to a first embodiment of the present invention. The relay transmitter apparatus 1 includes a reception antenna 10, a demultiplexer 64, a digital band amplifier 72a, analog band amplifiers 72b1 to 72bm, a multiplexer 66, a transmission antenna 28, and local oscillators 30 and 32.

The relay transmitter apparatus 1 is applied to a broadcasting system for transmitting a digital modulated signal and an analog modulated signal. The relay transmitter apparatus 1 performs relay transmission in which a digital modulated signal and an analog modulated signal transmitted from a broadcasting station are received, frequency band limitation for attenuating an undesired signal is performed, and a desired signal is amplified and transmitted.

A signal received by the reception antenna 10 is input to an input terminal Dc of the demultiplexer 64.

The demultiplexer 64 includes the input terminal Dc, an output terminal Da, and output terminals Db1 to Dbm. A plurality of channel frequency bands of a digital modulated signal is allocated to the output terminal Da. A single channel frequency band of an analog modulated signal is allocated to each of the output terminals Db1 to Dbm. The output terminal Da and the output terminals Db1 to Dbm output a signal in which a signal in a frequency band other than the allocated channel frequency band, which is contained in the signal input from the input terminal Dc, has been attenuated.

The signal output from the output terminal Da of the demultiplexer 64 is input to the digital band amplifier 72a. The digital band amplifier 72a performs frequency band limitation for attenuating a signal which is undesired with respect to a digital modulated signal and amplifies a desired signal, and outputs the amplified signal to an input terminal Ca of the multiplexer 66. Further, the signals output from the output terminals Db1 to Dbm of the demultiplexer 64 are input to the corresponding ones of the analog band amplifiers 72b1 to 72bm, respectively. Each of the analog band amplifiers 72b1 to 72bm performs frequency band limitation for attenuating a signal which is undesired with respect to an analog modulated signal and amplifies a desired signal, and outputs the amplified signal to a corresponding input terminal Cb1 to Cbm of the multiplexer 66.

The digital band amplifier 72a includes a reception amplifier 14a, a frequency converter 16a, an analog input/output filter 18a, an intermediate frequency amplifier 20a, a frequency converter 22a, and a transmission amplifier 24a. The reception amplifier 14a amplifies a signal in a broadcasting frequency band and inputs the resultant signal to the frequency converter 16a. The frequency converter 16a converts the input signal in a broadcasting frequency band into a signal in an intermediate broadcasting frequency band which is lower than the broadcasting frequency band of the input signal, and inputs the resultant signal to the analog input/output filter 18a. Here, the frequency bandwidth of the intermediate broadcasting frequency band is the same as that of the broadcasting frequency band, and the frequency of the intermediate broadcasting frequency band is lower than that of the broadcasting frequency band. In addition to the signal in a broadcasting frequency band output from the demultiplexer 64, a local oscillator signal L₁ output from the local oscillator 30 is also input to the frequency converter 16a. The frequency converter 16a multiplies the signal in a broadcasting frequency band by the local oscillator signal L₁ and then converts the resultant signal in the broadcasting frequency band into the signal in an intermediate broadcasting frequency band.

Specifically, assuming that the frequency of the local oscillator signal L₁ is f_{osc1} and the broadcasting frequency band ranges from a frequency f₁ to a frequency f₂, the intermediate broadcasting frequency band ranges from a frequency f₁-f_{osc1} to a frequency f₂-f_{osc1}. Here, a relationship f_{osc1} < f₁ < f₂ should be satisfied. Further, while, with the processing performed by the frequency converter 16a, an undesired image signal is generated in the frequency band ranging from a frequency f₁+f_{osc1} to a frequency f₂+f_{osc1}, this image signal is to be attenuated by a constituent component provided downstream of the frequency converter 16a.

The analog input/output filter 18a allows a digital modulated signal of the digital broadcasting system to pass, while attenuating an analog modulated system of the analog broadcasting system. The frequency band in which the digital band amplifier 72a performs frequency band limitation and amplification is determined by characteristics of the analog input/output filter 18a. Here, as a broadcasting station is allocated for each area in the digital broadcasting system and the analog broadcasting system, by designating an area in which the relay transmitter apparatus 1 is installed, the broadcasting station for which the designated area corresponds to a broadcasting area can be identified. Then, based on the channel frequency band allocated to the broadcasting station which is identified, the channel frequency band of a digital modulated signal in which the digital band amplifier 72a is to perform frequency band limitation and amplification can be determined.

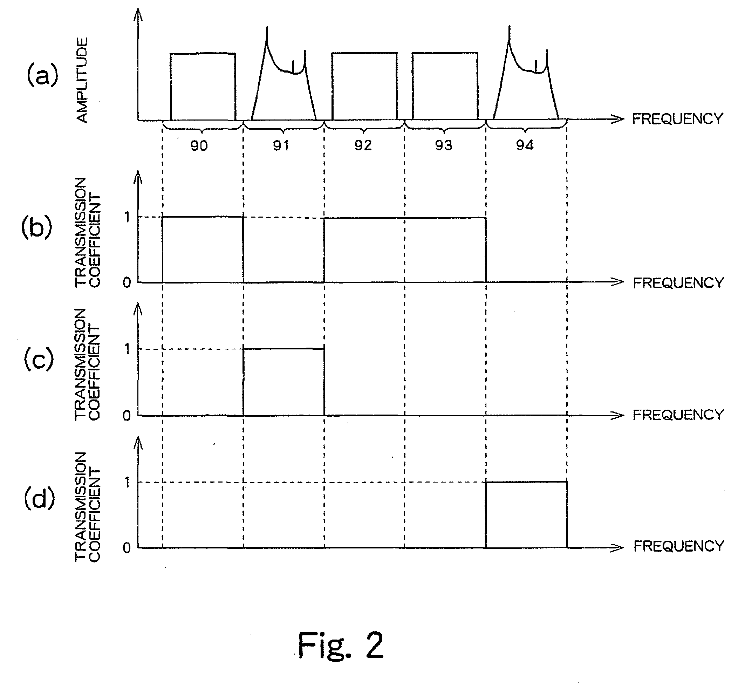

An example case wherein the channel frequency bands are allocated to two broadcasting stations in the analog broadcasting system and three broadcasting stations in the digital broadcasting system as shown in Fig. 2(a) will be described.

Referring to Fig. 2(a), channel frequency bands 91 and 94 are allocated to the broadcasting stations of the analog broadcasting system and channel frequency bands 90, 92 and 93 are allocated to the broadcasting stations of the digital broadcasting system. In this case, it is preferable that the analog input/output filter 18a is provided with characteristics as shown in Fig. 2(b) which allow a signal included in the channel frequency bands 90, 92, and 93 to pass and a signal included in the channel frequency bands 91 and 94 to be attenuated. In this example, the characteristics are represented by an antilogarithm of a transmission coefficient, with 1 being a value providing no attenuation and 0 being a value providing infinite attenuation. With the above characteristics, it is possible to allow a digital modulated signal transmitted from the broadcasting stations in the digital broadcasting system to pass and an analog modulated signal transmitted from the broadcasting stations in the analog broadcasting system to be attenuated. Further, with the characteristics which attenuate a signal included in the frequency band on the higher side with respect to the channel frequency band 93, unexpected disturbance and an image signal generated in the frequency converter 16a can be attenuated. In addition, with the characteristics which attenuate a signal included in the frequency band on the lower side with respect to the channel frequency band 90, unexpected disturbance can be attenuated. The analog input/output filter 18a can be formed by an LC circuit, a dielectric resonator, a surface acoustic wave resonator, and so on.

The analog input/output filter 18a inputs the band-limited signal in an intermediate broadcasting frequency band in the intermediate frequency amplifier 20a. The intermediate frequency amplifier 20a amplifies the input signal and inputs the resultant signal to the frequency converter 22a. In addition to the signal in an intermediate broadcasting frequency band output from the intermediate frequency amplifier 20a, a local oscillator signal L₂ output from the local oscillator 32 is also input to the frequency converter 22a. The frequency converter 22a multiplies the signal in an intermediate broadcasting frequency band by the local oscillator signal L₂ and then converts the resultant signal in an intermediate broadcasting frequency band into the signal in a broadcasting frequency band, which is further transmitted to the transmission amplifier 24a.

Specifically, assuming that the intermediate broadcasting frequency band ranges from a frequency f₁-f_{osc1} to a frequency f₂-f_{osc1} and the frequency of the local oscillator signal L₂ is f_{osc2}, a signal in a broadcasting frequency band ranging from a frequency f₁-f_{osc1} +f_{ocs2} to a frequency f₂-f_{osc1} +f_{ocs2} can be obtained. In this case, while an undesired image signal is generated in the frequency band ranging from a frequency |f₂-f_{osc1} -f_{ocs2}| to a frequency | f₁-f_{osc1} -f_{ocs2}|, this image signal is to be attenuated by a constituent component provided downstream of the frequency converter 22a.

The transmission amplifier 24a amplifies the input signal in a broadcasting frequency band and inputs the resultant signal to an input terminal Ca of the multiplexer 66.

The analog band amplifier 72bk, which is one of the analog band amplifiers 72b1 to 72mb, will be now described. The analog band amplifier 72bk includes a reception amplifier 14bk, a frequency converter 16bk, an analog input/output filter 18bk, an intermediate frequency amplifier 20bk, a frequency converter 22b, and a transmission amplifier 24bk. Here, k is any integer number ranging from 1 to m. In contrast to the digital band amplifier 72a which performs frequency band limitation in which an undesired signal is attenuated and amplification with respect to a digital modulated signal, each of the analog band amplifiers 72b1 to 72bm performs frequency band limitation in which an undesired signal is attenuated and amplification with respect to an analog modulated signal. The frequency bands in which the digital band amplifier 72a and the analog band amplifiers 72b1 to 72bm perform frequency band limitation and amplification are determined by the filter characteristics of the analog input/output filters 18a and 18b1 to 18bm, respectively. Accordingly, each of the analog band amplifiers 72b1 to 72bm can have the same structure as that of the digital band amplifier 72a except that each of the analog input/output filter 18a and the analog input/output filters 18b1 to 18bm has different characteristics. As such, in Fig. 1, the constituent components of each of the analog band amplifiers 72b1 to 72bm which are the same as those of the digital band amplifier 72a are designated by the same numerals, with signs "b1 to bm" being attached to the numerals in the analog band amplifiers for distinction from those of the digital band amplifier 72a, and will be described only briefly.

The reception amplifier 14bk amplifies a signal in a broadcasting frequency band and inputs the amplified signal to the frequency converter 16bk. The frequency converter 16bk converts the signal in a broadcasting frequency band into a signal in an intermediate broadcasting frequency band which is lower than the broadcasting frequency band, and inputs the resultant signal to the analog input/output filter 18bk. Specifically, in addition to the signal in a broadcasting frequency band output from the output terminal Dbk of the demultiplexer 64, a local oscillator signal L₁ output from the local oscillator 30 is also input to the frequency converter 16bk. The frequency converter 16bk multiplies the signal in a broadcasting frequency band by the local oscillator signal L₁ and then converts the resultant signal in a broadcasting frequency band into the signal in an intermediate broadcasting frequency band.

The analog input/output filter 18bk allows an analog modulated signal of the analog broadcasting system to pass, while attenuating a digital modulated signal of the digital broadcasting system. The frequency band in which the analog band amplifier 72bk performs frequency band limitation and amplification is determined by the characteristics of the analog input/output filter 18bk.

In the example shown in Fig. 2(a), the channel frequency bands 91 and 94 are allocated to the broadcasting stations of the analog broadcasting system and the channel frequency bands 90, 92 and 93 are allocated to the broadcasting stations of the digital broadcasting system. Therefore, in this case, in which m = 2, it is preferable that the analog input/output filter 18b1 is provided with characteristics which allow a signal included in the channel frequency band 91 to pass and a signal included in the channel frequency bands 90, 92, 93 and 94 to be attenuated and the analog input/output filter 18b2 is provided with characteristics which allow a signal included in the channel frequency band 94 to pass and a signal included in the channel frequency bands 90, 91, 92 and 93 to be attenuated. In this case, the characteristics of the analog input/output filters 18b1 and 18b2 are as shown in Figs. 2(c) and 2(d), respectively. With the above characteristics, it is possible to allow an analog modulated signal transmitted from the broadcasting stations in the analog broadcasting system to pass and a digital modulated signal transmitted from the broadcasting stations in the digital broadcasting system to be attenuated. Further, with the characteristics which attenuate a signal included in the frequency band on the higher band side with respect to the pass frequency bands of the analog input/output filters 18b1 and 18b2, unexpected disturbance and image signals generated in the frequency converters 16b1 and 16b2, respectively, can be attenuated. In addition, with the characteristics which attenuate a signal included in the frequency band on the lower band side with respect to the pass frequency bands of the analog input/output filters 18b1 and 18b2, unexpected disturbance can be attenuated.

The analog input/output filter 18bk inputs the band-limited signal in an intermediate broadcasting frequency band in the intermediate frequency amplifier 20bk. The intermediate frequency amplifier 20bk amplifies the input signal and inputs the resultant signal to the frequency converter 22bk. In addition to the signal in an intermediate broadcasting frequency band output from the intermediate frequency amplifier 20bk, a local oscillator signal L₂ output from a local oscillator 32 is also input to the frequency converter 22bk. The frequency converter 22bk multiplies the signal in an intermediate broadcasting frequency band by the local oscillator signal L₂ and then converts the resultant signal in an intermediate broadcasting frequency band into the signal in a broadcasting frequency band, which is further transmitted to the transmission amplifier 24bk. The transmission amplifier 24bk amplifies the signal in a broadcasting frequency band and inputs the resultant signal to an input terminal Cbk of the multiplexer 66.

The multiplexer 66 includes the input terminal Ca, input terminals Cb1 to Cbm, and an output terminal Cc. A plurality of channel frequency bands of a digital modulated signal are allocated to the input terminal Ca, and a single channel frequency band of an analog modulated signal is allocated to each of the input terminals Cb1 to Cbm. The multiplexer 66 combines signals input from the input terminal Ca and the input terminals Cb1 to Cbm, respectively, and outputs the combined signal through the output terminal Cc. Further, the multiplexer 66 attenuates a signal in a frequency band out of the allocated channel frequency bands, which is contained in the signals input from the input terminal Ca and the input terminals Cb1 to Cbm, respectively, and outputs the attenuated signal from the output terminal Cc. Further, the multiplexer 66 attenuates a signal input, which passes from the input terminal Ca to each of the input terminals Cb1 to Cbm, and attenuates a signal input, which passes from the input terminal Cbk to each of the input terminals Ca and Cbp (p is any integer number from 1 to m, which is not k). A signal output from the multiplexer 66 is transmitted as an electromagnetic wave via the transmission antenna 28.

In the relay transmitter apparatus 1 according to the present embodiment, a means which performs frequency band limitation with respect to the channel frequency bands of a plurality of digital modulated signals is implemented by a single unit, i.e. the digital band amplifier 72a. This structure in which a plurality of digital modulated signals can be processed with a single unit can be realized by the properties of a digital modulated signal, which will be described below.

Specifically, the influence of an inter-modulated signal generated within an adjacent channel frequency band is smaller when the inter-modulated signal is a digital modulated signal than when the inter-modulated signal is an analog modulated signal. Further, the influence of disturbance generated due to noise superposed the frequency band near each channel frequency band, such as disturbance generated within the adjacent channel frequency band at the time of frequency conversion, is also smaller when the disturbance is caused by a digital modulated signal than when the disturbance is caused by an analog modulated signal. This is because while, in an analog modulated signal, a large electric power is concentrated within a narrow frequency band, in a digital modulated signal, electric power is distributed with a uniform density within a channel frequency band. More specifically, with regard to signals with the same electric power, the lower the density of electric power of a signal in a frequency band, the smaller the influence of the signal on the adjacent channel frequency band.

Accordingly, in a case where all the signals in a plurality of adjacent channel frequency bands are digital modulated signals or a case where an analog modulated signal is separated in the course of relay transmission processing, it is not always necessary to provide a structure which divides a plurality of channel frequency bands into each channel frequency band as in the relay transmitter apparatus 9 shown in Fig. 9. In view of such properties of a digital modulated signal, a simplified structure can be achieved in the relay transmitter apparatus 1 according to the present embodiment compared to the relay transmitter apparatus 9 of related art.

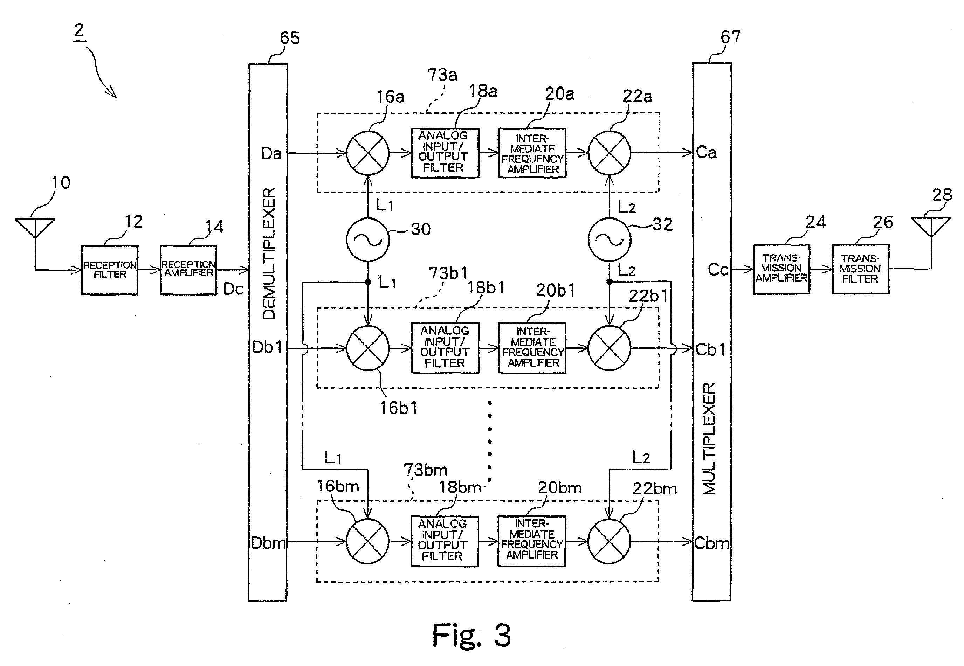

Fig. 3 shows a structure of a relay transmitter apparatus 2 according to a second embodiment of the present invention. The relay transmitter apparatus 2 is suitable for performing relay transmission of a signal having a smaller electric power than that of a signal which is relay-transmitted by the relay transmitter apparatus 1. In the relay transmitter apparatus 2, the same constituent components as those of the relay transmitter apparatus 1 are designated by the same numerals and description thereof will be omitted. The relay transmitter apparatus 2 includes a reception filter 12 and a reception amplifier 14 between a reception antenna 10 and an input terminal Dc of a demultiplexer 65 and also includes a transmission amplifier 24 and a transmission filter 26 between an output terminal Cc of a multiplexer 67 and a transmission antenna 28.

A digital band amplifier 73a has a structure obtained by eliminating the reception amplifier 14a and the transmission amplifier 24a from the digital band amplifier 72a. An analog band amplifier 73bk has a structure obtained by eliminating the reception amplifier 14bk and the transmission amplifier 24bk from the analog band amplifier 72bk.

The reception amplifier 14 is the same as the reception amplifiers 14a and 14b1 to 14bm and the transmission amplifier 24 is the same as the transmission amplifiers 24a and 24b1 to 24bm, and signs "a" and "b1" to "bm" attached to the numerals discriminate different channel frequency bands to be applied.

A signal received by the reception antenna 10 is input to the reception filter 12. The reception filter 12 has, as the pass frequency bands, broadcasting frequency bands including a plurality of channel frequency bands each allocated to a single broadcasting station. The reception filter 12 attenuates a signal in a frequency band out of the broadcasting frequency band, which is contained in the input signal, and inputs the resultant signal in the reception amplifier 14. The reception amplifier 14 amplifies the input signal and inputs the resultant signal to the input terminal Dc of the demultiplexer 65.

The processing performed by the frequency converter 16a, the analog input/input filter 18a, the intermediate frequency amplifier 20a, and the frequency converter 22a of the digital band amplifier 73a, and the processing performed by the frequency converter 16bk, the analog input/input filter 18bk, the intermediate frequency amplifier 20bk, and the frequency converter 22bk of the analog band amplifier 73bk, are the same as the processing performed by the relay transmitter apparatus 1 according to the first embodiment.

A signal output from the output terminal Cc of the multiplexer 67 is input to the transmission amplifier 24. The transmission amplifier 24 amplifies the received signal and inputs the resultant signal to the transmission filter 26. The transmission filter 26 attenuates a signal in a frequency band out of the broadcasting frequency band, such as a higher harmonic signal generated due to the nonlinearity of the transmission amplifier 24. A signal output from the transmission filter 26 is transmitted as an electromagnetic wave through the transmission antenna 28.

With the above structure, the reception amplifier 14 and the transmission amplifier 24 are applied to both the channel frequency band occupied by a digital modulated signal and the channel frequency band occupied by an analog modulated signal. This simplifies the structure of the relay transmitter apparatus 2 according to the second embodiment compared to the relay transmitter apparatus 1 according to the first embodiment. This structure is preferable in a case where electric power of a signal which is relay-transmitted is relatively small and the nonlinearity of the reception amplifier 14, the transmission amplifier 24, and so on, causes no problems.

Here, the relay transmitter apparatuses 1 and 2 have a structure in which a signal in a broadcasting frequency band is converted into a signal in an intermediate broadcasting frequency band, and then band limitation and intermediate frequency amplification is performed, from the viewpoints that realization of the filter characteristics of the analog input/output filters 18a and 18b1 to 18bm can be facilitated, and that amplification gain which is greater than that of the transmission amplifier 24 is distributed to the intermediate frequency amplifier 20a and 20b1 to 20bm, so that unstable operations such as abnormal oscillation can be prevented. However, in a case where the filter characteristics required for the analog input/output filters 18a and 18b1 to 18bm can be realized easily in the broadcasting frequency band, a case where the amplification gain required for relay transmission is small, a case where sufficient measures against abnormal oscillation can be taken for the transmission amplifiers 24a, 24bk and 24, and other cases, it is not always necessary to convert a signal in a broadcasting frequency band into a signal in an intermediate broadcasting frequency band. In this case, the frequency converters 16a, 16b1 to 16bm, 22a, 22b1 to 22bm, the intermediate frequency amplifiers 20a, 20b1 to 20bm, and the local oscillators 30 and 32, may be eliminated, so that the structure of the relay transmitter apparatus can be simplified.

Further, in the relay transmitter apparatus 1, the demultiplexer 64 is provided and is configured such that each of the output terminals Da and Db1 to Dbm of the demultiplexier 64 outputs a signal in which a signal in a frequency band other than the allocated channel frequency band, which is obtained in the signal input from the input terminal Dc has been attenuated. Here, in place of the structure in which frequency band limitation for each channel frequency band is performed in the demultiplexer 64, a structure can be provided in which the demultiplexer 64 is replaced with a distributor which distributes a signal without performing the frequency band limitation and a filter which performs the frequency band limitation similar to the demultiplexer 64 is provided between the distributor and the digital band amplifier 72a and between the distributor and each of the analog band amplifiers 72b1 to 72bm. Similarly, in place of the structure in which frequency band limitation for each channel frequency band is performed in the multiplexer 66, a structure can be provided in which the multiplexer 66 is replaced with a combiner which combines a signal without performing the frequency band limitation, and a filter which performs the frequency band limitation similar to the multiplexer 66 is provided between the combiner and the digital band amplifier 72a and between the combiner and each of the analog band amplifiers 72b1 to 72bm.

Further, in the relay transmitter apparatus 2, similar to the relay transmitter apparatus 1, a structure can be provided in which the demultiplexer 65 is replaced with a distributor which distributes a signal without performing the frequency band limitation and a filter which performs the frequency band limitation similar to the demultiplexer 65 is provided between the distributor and the digital band amplifier 73a and between the distributor and each of the analog band amplifiers 73b1 to 73bm. Similarly, in place of the structure in which frequency band limitation for each channel frequency band is performed in the multiplexer 67, a structure can be provided in which the multiplexer 67 is replaced with a combiner which combines a signal without performing the frequency band limitation, and a filter which performs the frequency band limitation similar to the multiplexer 67 is provided between the combiner and the digital band amplifier 73a and between the combiner and each of the analog band amplifiers 73b1 to 73bm.

The relay transmitter apparatus 1 according to the first embodiment, which performs relay transmission with respect to both a digital modulated signal and an analog modulated signal which are transmitted from a broadcasting station, includes the analog band amplifiers 72b1 to 72bm, in addition to the digital band amplifier 72a. However, if there is no need to perform relay transmission with respect to an analog modulated signal, in which case the analog band amplifiers 72b1 to 72bm need not be provided, the structure of a relay transmitter apparatus can be simplified as in a relay transmitter apparatus 3 of the third embodiment which will be described below.

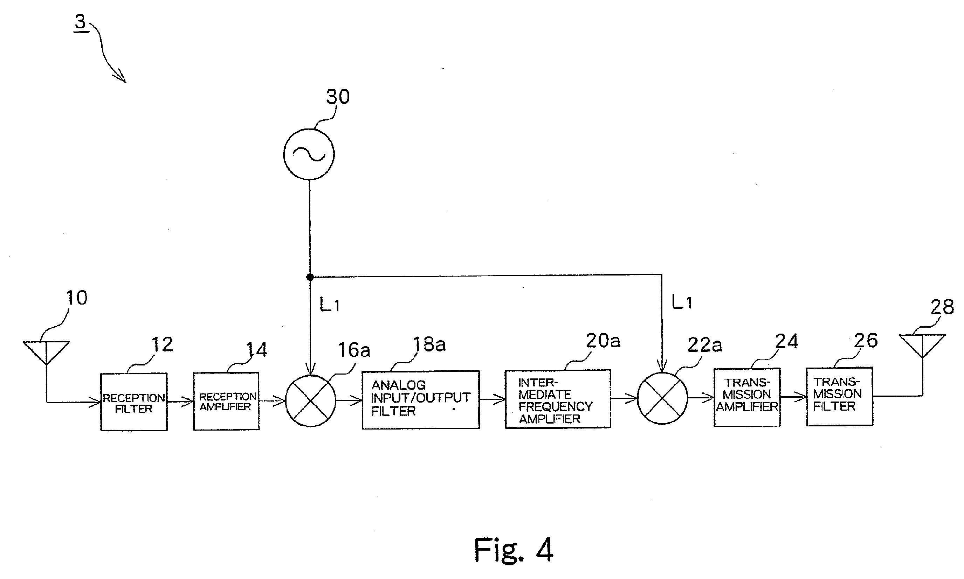

Fig. 4 shows a structure of a relay transmitter apparatus 3 according to a third embodiment of the present invention. The relay transmitter apparatus 3 is applied to a digital broadcasting system to which a digital modulated signal is applied, and performs relay transmission of only a digital modulated signal. The constituent components of the relay transmitter apparatus 3 which are the same as those in the transmitter apparatuses 1 and 2 according to the first and second embodiments are designated by the same numerals and will not be described again.

The relay transmitter apparatus 3 has a structure in which the demultiplexer 64, the analog band amplifiers 72b1 to 72bm, the multiplexer 66, and the local oscillators are removed from the structure of the relay transmitter apparatus 1, so that the reception amplifier 14 and the frequency converter 16a are directly connected and the frequency converter 22a and the transmitter amplifier 24 are directly connected. Further, an identical local oscillator signal L₁ is input to the frequency converters 16a and 22a.

In the relay transmitter apparatus 3, an analog modulated signal is attenuated in the analog input/output filter 18a. Consequently, adverse effects caused by an analog modulated signal and an inter-modulated signal due to disturbance existing near the frequency of the analog modulated signal, and adverse effects caused by disturbance generated by noise superposed in the frequency band near each channel frequency band, can be prevented.

The transmitter relay apparatuses in the digital broadcasting system often adopts an SFN (Single Frequency Network) method in which the frequency of a signal which is received is made to coincide with the frequency of a signal which is transmitted so as to achieve effective use of the frequencies. In the relay transmitter apparatus 3, by inputting the identical local oscillator signal L₁ to the frequency converters 16a and 22a, the frequency of the broadcasting frequency band of a signal which is received is made to coincide with the frequency of the broadcasting frequency band of a signal which is transmitted, thereby corresponding to the SFN method. With this method, by adopting a digital modulation method capable of detection of a disturbance wave, such as an OFDM modulation method, the influences of disturbance between a signal transmitted via the relay transmitter apparatus 3 and a signal directly transmitted from the broadcasting station can be reduced in a receiver set.

Also, an analog modulated signal is attenuated in the analog input/output filter 18a, so that influences caused by performing relay transmission of a signal with a single frequency in the digital broadcasting system onto the existing analog broadcasting system can be reduced.

If relay transmission is performed by a relay transmitter apparatus which adopts the SFN method without attenuation of an analog modulated signal, the quality of information acquired by a receiver which receives the analog modulated signal is degraded, because the analog broadcasting system is generally provided with no means which reduces the influences caused by such disturbance. According to the relay transmitter apparatus 3 of the third embodiment, in which an analog modulated signal is attenuated in the analog input/output filter 18a, no disturbances are caused between a directly incoming analog modulated signal and an analog modulated signal which is input via the relay transmitter apparatus 3, so that influences upon the existing analog broadcasting systems can be suppressed.

Further, similar to the relay transmitter apparatuses 1 and 2 according to the first and second embodiments, in cases where the filter characteristics required for the analog input/output filter 18a can be realized easily in the broadcasting frequency band, where the amplification gain required for relay transmission is small, where sufficient measures against the abnormal oscillation can be taken for the transmission amplifier 24, and other cases, the frequency converters 16a and 22a, the intermediate frequency amplifier 20a, and the local oscillator 30 may be eliminated, so that the structure of the relay transmitter apparatus 3 can be simplified,

In the first to third embodiments described above, an analog input/output filter is applied as a means which determines the frequency band in which frequency band limitation and amplification is performed. Here, the analog input/output filter can be advantageously implemented by a low-cost passive element. However, in cases where the required filter characteristics are complicated such as when the broadcasting frequency band of the digital broadcasting system exists over a very broad frequency band, when a plurality of channel frequency bands in the analog broadcasting system appear alternately with a plurality of channel frequency bands in the digital broadcasting system, and so on, it is difficult to realize the filter characteristics. In addition, because the filter characteristics which are required vary depending on the area in which the relay transmitter apparatus 1 or the relay transmitter apparatus 3 is installed, it is necessary to design the analog input/output filter 18a for each area. These problems are to be solved by a relay transmitter apparatus 5 according to the fourth embodiment as will be described below.

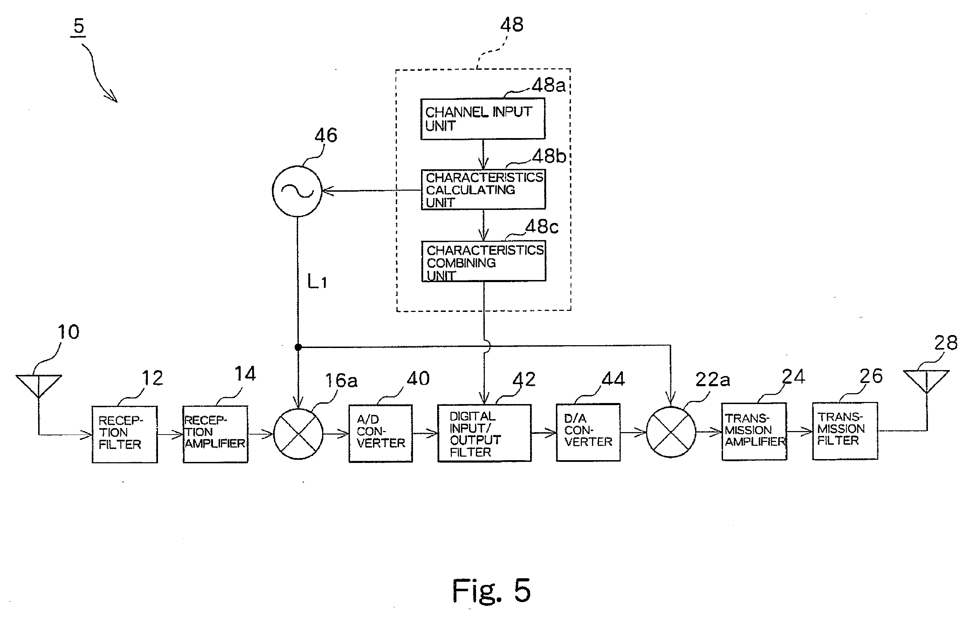

Fig. 5 shows a structure of the relay transmitter apparatus 5 according to the fourth embodiment of the present invention. The constituent components of the relay transmitter apparatus 5 which are the same as those of the relay transmitter apparatuses 1 to 3 are designated by the same numerals and will be described only briefly. The relay transmitter apparatus 5 includes a reception antenna 10, a reception filter 12, a reception amplifier 14, a frequency converter 16a, an A/D converter 40, a digital input/output filter 42, a D/A converter 44, a frequency converter 22a, a transmission amplifier 24, a transmission filter 26, a transmission antenna 28, a band limitation tap coefficient setting unit 48, and a local oscillator 46.

A signal received by the reception antenna 10 is input to the reception amplifier 14 via the reception filter 12. The reception amplifier 14 amplifies the received signal and inputs the resultant signal to the frequency converter 16a.

The frequency converter 16a converts a signal in a broadcasting frequency band into a signal in an intermediate broadcasting frequency band which is lower than the broadcasting frequency band, and inputs the resultant signal in the A/D converter 40. In addition to the signal in a broadcasting frequency band output from the reception amplifier 14, a local oscillator signal L₁ output from the local oscillator 46 is also input to the frequency converter 16a. The frequency converter 16a multiplies the signal in a broadcasting frequency band by the local oscillator signal L₁ and then converts the resultant signal in a broadcasting frequency band into the signal in an intermediate broadcasting frequency band.

The A/D converter 40 converts the received signal in the intermediate broadcasting frequency band into a digital signal and inputs the digital signal in the digital input/output filter 42.

The filter characteristics of the digital input/output filter 42 are determined by a band limitation tap coefficient input thereto. In this embodiment, the band limitation tap coefficient is input from the band limitation tap coefficient setting unit 48.

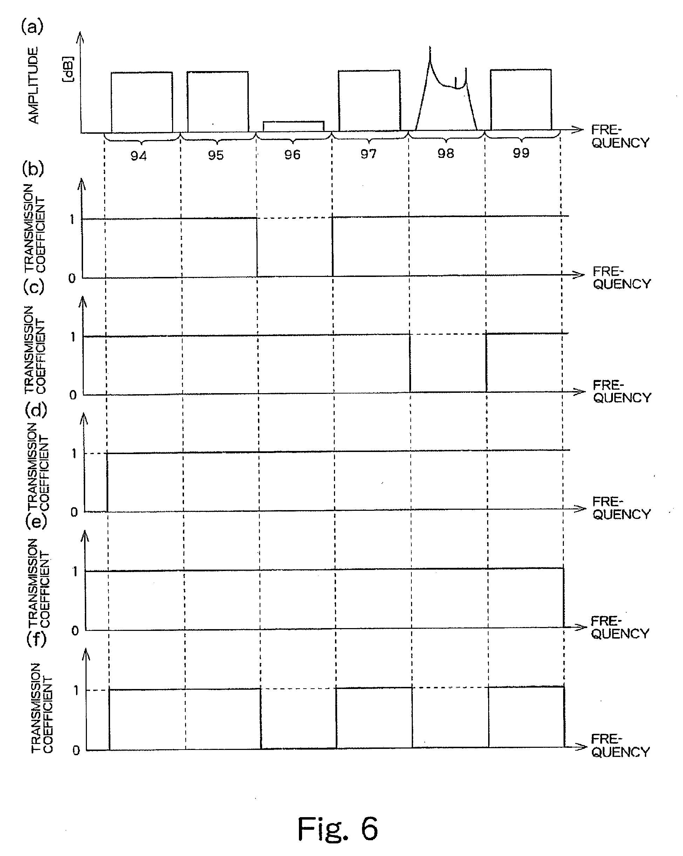

The band limitation tap coefficient setting unit 48 is formed by including a channel input unit 48a, a characteristics calculating unit 48b, a characteristics combining unit 48c. The band limitation tap coefficient setting unit 48 calculates a band limitation tap coefficient based on an input channel number of a broadcasting station for which the area in which the relay transmitter apparatus 5 is installed is designated as a broadcasting area. Here, an example case where a channel frequency band 98 is allocated to an analog broadcasting system and channel frequency bands 94, 95, 97, and 99 are allocated to digital broadcasting stations, as shown in Fig. 6 (a), will be described. In this example, it is assumed that a channel frequency band 96 is allocated to a digital broadcasting station for which the area in which the relay transmitter apparatus 5 is installed is not designated as a broadcasting area. The channel frequency bands are identified by channel numbers in ascending order of frequencies, and the channel frequency bands 94 to 99 are identified by channel numbers 94 to 99, respectively.

The band limitation tap coefficient setting unit 48 calculates a band limitation tap coefficient in accordance with the following processing (1) to (10), and then inputs the calculated band limitation tap coefficient in the digital input/output filter 42.
(1) A channel number of a broadcasting station of a digital broadcasting system and a channel number of a broadcasting station of an analog broadcasting system are individually input to the channel input unit 48a. Here, the channel numbers to be input are limited to those allocated to the broadcasting stations for which the area in which the relay transmitter apparatus 5 is designated as a broadcasting area. In the example shown in Fig. 6(a), the channel numbers 94, 95, 97, and 99 can be input as channel numbers of the digital broadcasting system, and the channel number 98 can be input as a channel number of the analog broadcasting system. The channel input unit 48a then inputs the channel numbers which are input to the characteristics calculating unit 48b.
(2) The characteristics calculating unit 48b, in which the channel frequency band corresponding to each channel number has been prestored, calculates a broadcasting frequency band based on the input channel number. The characteristics calculating unit 48b then determines the frequency of the local oscillator signal L₁ based on the relationship between the broadcasting frequency band which is calculated and the predetermined intermediate broadcasting frequency band, to thereby set the frequency of the local oscillator signal L₁ output from the local oscillator 46.
(3) Here, the characteristics calculating unit 48b recognizes a channel number which is not input as a channel number of a digital broadcasting system nor as a channel number of an analog broadcasting system, among the channel numbers of the channel frequency bands included in the calculated broadcasting frequency bands, as a channel number which is allocated to a broadcasting station for which the area in which the relay transmitter apparatus 5 is installed is not designated as a broadcasting area. The characteristics calculating unit 48b then calculates a function representing the band elimination characteristics which attenuate a signal in the channel frequency band corresponding to the channel number thus recognized and inputs the calculated function in the characteristics combining unit 48c. This function, which is a function of frequency domain representation, will be referred to as a band elimination characteristics function. In the example shown in Fig. 6(a), a channel number of the channel frequency band corresponding to such a function is 96 and the band elimination characteristics function is as shown in Fig. 6(b).
(4) The characteristics calculating unit 48b further calculates a band elimination characteristics function which attenuates a signal in a channel frequency band corresponding to the channel number of the analog broadcasting system and inputs the band elimination characteristics function thus calculated in the characteristics combining unit 48c. In the example shown in Fig. 6(a), the channel number of the analog broadcasting system is 98, and the band elimination characteristics function is as shown in Fig. 6(c).
(5) The characteristics calculating unit 48b then searches and retrieves a channel number corresponding to the lowest channel frequency band from the channel numbers of the digital broadcasting system.
(6) The characteristics calculating unit 48b then calculates a function representing high pass characteristics having a lower end of the channel frequency band corresponding to the retrieved channel number as a cutoff frequency, and inputs the calculated function in the characteristics combining unit 48c. This function, which is a function of frequency domain representation, will be referred to as a high pass characteristics function. In the example shown in Fig. 6(a), the channel number corresponding to the channel frequency band which is in the lowest band is 94, and the high pass characteristics function is as shown in Fig. 6(d).
(7) The characteristics calculating unit 48b also searches and retrieves a channel number corresponding to the highest channel frequency band from the channel numbers of the digital broadcasting system.
(8) The characteristics calculating unit 48b then calculates a function representing low pass characteristics having a higher end of the channel frequency band corresponding to the retrieved channel number as a cutoff frequency and inputs the calculated function in the characteristics combining unit 48c. This function, which is a function of frequency domain representation, will be referred to as a low pass characteristics function. In the example shown in Fig. 6(a), the channel number corresponding to the channel frequency band which is in the highest band is 99 and the low pass characteristics function is as shown in Fig. 6(e).
(9) The characteristics combining unit 48c calculates a characteristics function obtained by multiplying the band elimination characteristics function, the high pass characteristics function, and the low pass characteristics function. In the example shown in Fig. 6(a), the characteristics function which is calculated is as shown in Fig. 6(f).
(10) The characteristics combining unit 48c applies inverse Fourier transform to the characteristics function to calculate a characteristics function of time domain representation, and then calculates a band limitation tap coefficient by discretization of the characteristics function. The characteristics combining unit 48c then inputs the band limitation tap coefficient in the digital input/output filter 42.

While a case where a function of the frequency domain representation is calculated is assumed in each processing (3), (4), (6), and (8) described above, it is also possible to adopt a structure for calculating a function of the time domain representation in each processing. In this case, a characteristics function of time domain representation can be calculated by convolution of a band limitation characteristics function of time domain representation, a high pass characteristics function of time domain representation, and a low pass characteristics function of time domain representation, and then a band limitation tap coefficient can be calculated by discretization of the characteristics function if time domain representation thus calculated.

Further, in the above example, the band limitation tap coefficient setting unit 48 has a structure in which a band limitation tap coefficient is calculated based on an input channel number. In place of this structure, a structure in which a band limitation characteristics function, a high pass characteristics function, a low pass characteristics function, a characteristics function, and so on of frequency domain representation or time domain representation are directly obtained, and a band limitation tap coefficient is calculated based on these values can also be adopted.

The digital input/output filter 42 inputs a band-limited signal in an intermediate broadcasting frequency band in the D/A converter 44. The D/A converter 44 then converts the input signal into an analog signal, and inputs the analog signal in the frequency converter 22a. The frequency converter 22a converts the signal in an intermediate broadcasting frequency band into a signal in a broadcasting frequency band and inputs the resultant signal in the transmission amplifier 24. Specifically, the frequency converter 22a multiplies the signal in the intermediate broadcasting frequency band with the local oscillator signal L₁ and converts the signal in the intermediate broadcasting frequency band into the signal in a broadcasting frequency band.

The transmission amplifier 24 amplifies the signal in a broadcasting frequency band and inputs the amplified signal in the transmission filter 26. The transmission filter 26 attenuates an image signal in the frequency band out of the broadcasting frequency band of the input signal, a higher harmonic signal caused by the nonlinearity of the transmission amplifier 24, and so on, and inputs the resultant signal in the transmission antenna 28. The transmission antenna 28 transmits the input signal as an electromagnetic wave.

In the relay transmitter apparatus 5 according to the present embodiment, a characteristics function representing desired filter characteristics is calculated based on the input of a channel number of a digital broadcasting system and a channel number of an analog broadcasting system, and a band limitation tap coefficient is then obtained from the characteristics function to thereby determine the characteristics of the digital input/output filter 42. As such, even if the required filter characteristics are complicated, such as when a broadcasting station of an analog broadcasting system for which an area in which the relay transmitter apparatus 5 is installed is designated as a broadcasting area exists, the frequency band of a signal to be relay-transmitted can be set easily. It is also possible to easily determine the characteristics of the digital input/output filter 42 such that a signal which is transmitted from a broadcasting station which does not designate an area in which the relay transmitter apparatus 5 is installed as a broadcasting area will not be relay-transmitted.

In addition, it is possible to set the frequency band of a signal to be relay-transmitted by the relay transmitter apparatus 5 only with the input of a channel number of the digital broadcasting system and a channel number of the analog broadcasting system, which leads to an advantage that the need for changing the hardware design for each area in which the relay transmitter apparatus 5 is installed can be eliminated.

The relay transmitter apparatus 5 according to the fourth embodiment has a structure in which signals included within the broadcasting frequency band are amplified with the same gain and then transmitted. With such a structure, if the electric field intensity of a signal received by the relay transmitter apparatus 5 varies among the broadcasting stations, the electric field intensity of a signal transmitted by the relay transmitter apparatus 5 also varies for each broadcasting station. Consequently, even if the relay transmitter apparatus 5 is installed, it is difficult to obtain an advantage of decreasing areas with a degraded quality with respect to all the broadcasting stations. Also, with a change of the propagation circumstances of an electromagnetic wave transmitted from the broadcasting station with time, a difference in the electric field intensities of a signal received by the relay transmitter apparatus 5 among different broadcasting stations also varies, thereby making the information quality obtained by a receiver unstable. A relay transmitter apparatus 7 according to the fifth embodiment which overcomes the above problems will be described below.

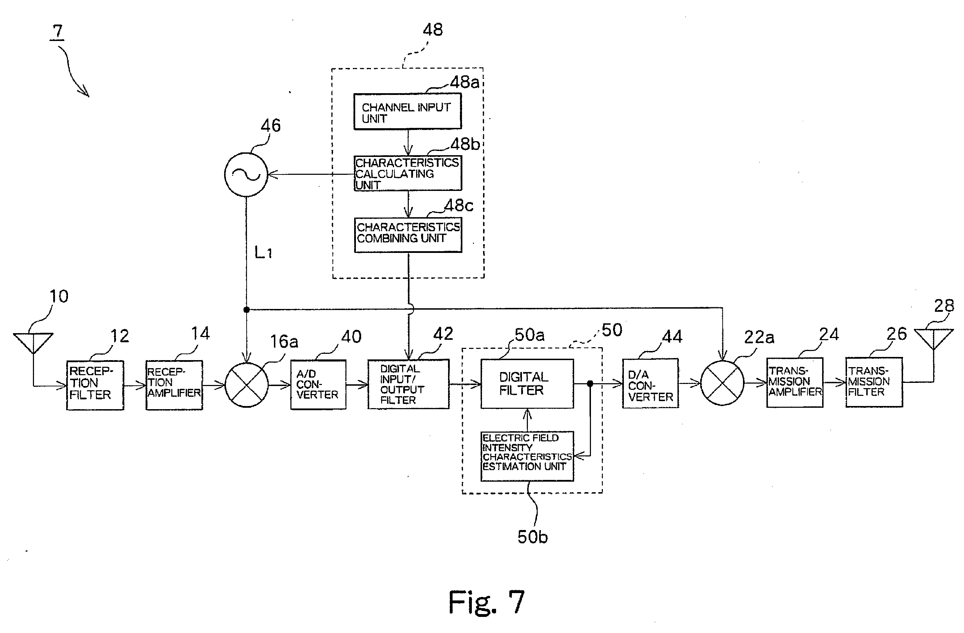

Fig. 7 shows a structure of the relay transmitter apparatus 7 according to the fifth embodiment of the present invention. The constituent components of the relay transmitter apparatus 7 which are the same as those in the relay transmitter apparatus 5 of the fourth embodiment are designated by the same numerals and will be described only briefly. The relay transmitter apparatus 7 differs from the relay transmitter apparatus 5 in that an amplitude equalizer 50 is provided between the digital input/output filter 42 and the D/A converter 44.

The amplitude equalizer 50 includes a digital filter 50a and an electric field intensity characteristics estimation unit 50b. The filter characteristics of the digital filter 50a are determined by an amplitude tap coefficient input from the electric field intensity characteristics estimation unit 50b.

The electric field intensity characteristics estimation unit 50b calculates an amplitude equalization tap coefficient in accordance with the following processing (1) to (4) and inputs the calculated amplitude equalization tap coefficient in the digital filter 50a.
(1) The electric field intensity characteristics estimation unit 50b subjects a signal in the intermediate broadcasting frequency band output from the digital filter 50a to Fourier transform, to generate a signal in the intermediate broadcasting frequency band of frequency domain representation, i.e. a frequency spectrum signal of a signal in the intermediate broadcasting frequency band.
(2) The electric field intensity characteristics estimation unit 50b calculates a frequency spectrum envelope function representing an envelope of the frequency spectrum signal.
(3) The electric field intensity characteristics estimation unit 50b then calculates a normalized frequency spectrum envelope function obtained by normalizing the frequency spectrum envelope function with a predetermined reference value. The maximum value of the frequency spectrum envelope function is preferable for the reference value.
(4) The electric field intensity characteristics estimation unit 50b further calculates the reciprocal of the normalized frequency spectrum envelope function and then calculates an amplitude equalization tap coefficient by discretization of the calculated reciprocal, and inputs the amplitude equalization tap coefficient in the digital filter 50a.

It is preferable to determine the period of updating the amplitude equalization tap coefficient in accordance with the period of a change in the propagation circumstances of an electromagnetic wave transmitted from the broadcasting station.

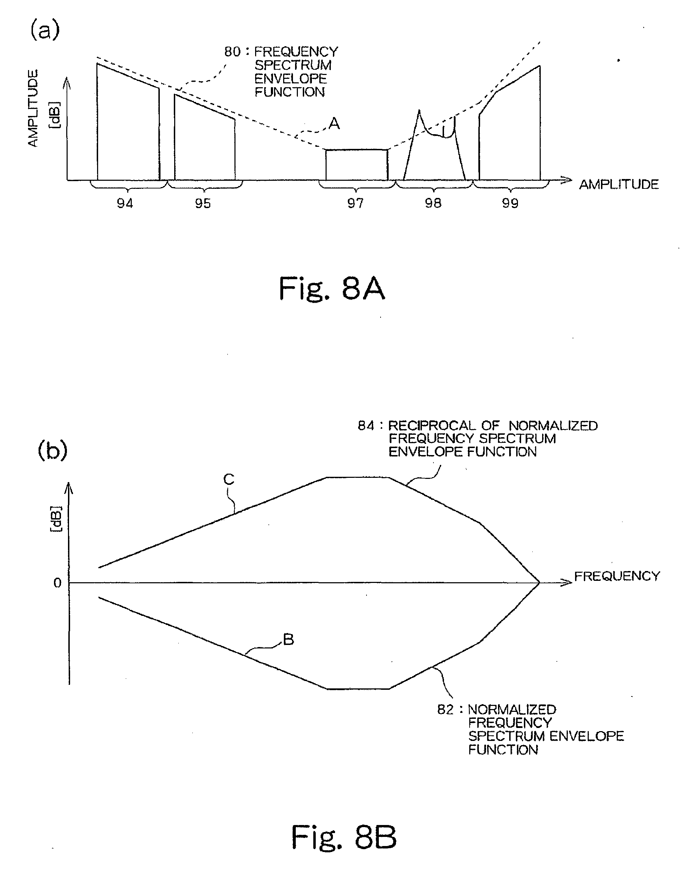

Here, an example case where a channel number of the digital broadcasting system and a channel number of the analog broadcasting system are allocated as shown in Fig. 6(a) and the electric field intensity distribution is as shown in Fig. 8A will be described. In this case, the frequency spectrum envelope function 80, the normalized frequency spectrum envelope function 82, and the reciprocal of the normalized frequency spectrum envelope function 84 calculated by the electric field intensity characteristics estimation unit 50b are as shown in Figs. 8A and 8B. In Fig. 8A, the electric field intensity is minimum in the channel frequency band with a channel number 97, and the frequency spectrum envelope function 80 is as indicated by a curve A. A curve B indicates the normalized frequency spectrum envelope function 82 obtained by normalization with the maximum value of the frequency spectrum envelope function 80 being used as a reference, and a curve C indicates the reciprocal of the normalized frequency spectrum envelope function 82. Here, the function values are represented by a logarithmic scale, with the reference value being 0dB.

The digital filter 50a, based on the characteristics determined on the basis of the amplitude equalization tap coefficient which is input from the electric field intensity characteristics estimation unit 50b, changes the amplitude of the input signal and inputs the resultant signal in the D/A converter 44.

According to the present embodiment, because the deviation of the amplitude of a received signal for each broadcasting station is equalized, the advantage of decreasing areas with degraded quality by relay transmission can be reliably achieved. Further, because the amplitude equalization tap coefficient is updated by a predetermined period, the amplitude equalization characteristics of the amplitude equalizer 50 can be changed adaptively with respect to a change in the propagation circumstances of electromagnetic waves. As such, a problem that with a change of the propagation circumstances of an electromagnetic wave transmitted from the broadcasting station with time, a difference in the electric field intensities of a signal received by the relay transmitter apparatus 7 among different broadcasting stations also varies, thereby making the information quality obtained by a receiver unstable, can be prevented.

It has been assumed that the relay transmitter apparatuses 3, 5, and 7 described above perform relay transmission in the digital broadcasting system and therefore attenuate an analog modulated signal applied in the analog broadcasting system. However, it is not only the analog modulated signal in the analog broadcasting system that may affect the digital broadcasting system. As described above, the higher the electric power density of a signal in the frequency region, the higher the likelihood of adversely affecting the frequency band in the vicinity. It is therefore preferable that the filter characteristics of the analog input/output filter 18a provided in the relay transmitter apparatus 3, or the digital input/output filter 42 provided in the relay transmitter apparatuses 5 and 7, are determined such that a modulated signal of a communication system which uses a modulated signal having a high electric power density in the frequency region, in addition to the analog modulated signal described above, can be attenuated.

Further, it is also possible to achieve a structure in which relay transmission with respect to a plurality of systems is performed by a single relay transmitter apparatus. For example, a structure in which both a digital modulated signal which is used in a digital television broadcasting system and a digital modulated signal which is used in a digital data communication system such as a digital cellular phone system, a digital mobile communication system, and so on, are relay-transmitted simultaneously can be conceived. In this case, it can be configured that a signal existing in the frequency band out of the wireless frequency band used in these plurality of systems is attenuated in the relay transmitter apparatus and is not relay transmitted.

In addition, while in the relay transmitter apparatuses 3, 5, and 7 described above, the local oscillator signals with the same frequency are input, local oscillator signals with different frequencies may be input to the frequency converter 16a and the frequency converter 22a, respectively, as in the relay transmitter apparatuses 1 and 2. With this structure, it is possible to perform relay transmission of a signal in the broadcasting frequency band including a plurality of channel frequency bands while shifting the frequency bands to other frequency bands, without changing the frequency intervals and frequency sequences of the plurality of channel frequency bands. For example, by shifting the signal in a plurality of channel frequency bands received by the relay transmitter apparatus to a frequency band in which frequency allocation is sparse, effective use of the frequencies can be achieved. Also, by connecting a transmission cable in place of the transmission antenna 28 for transmitting a signal, the relay transmitter apparatus can also be used as a frequency converter apparatus for connecting to other systems such as a CATV.

## Claims

1. A digital television broadcasting signal relay transmitter apparatus (7) for performing relay transmission of a digital television broadcasting signal in a television broadcasting frequency band, comprising:
a reception unit which receives the digital television broadcasting signal;
an A/D converter (40) which converts a signal received by the reception unit into a digital signal and outputs the digital signal;
a digital filter (42) which acquires a tap coefficient which determines filter characteristics, applies filtering processing based on the filter characteristics determined by the tap coefficient to a signal output from the A/D converter (40), and outputs a signal obtained by the filtering processing;
an amplitude equalizing digital filter (50a) which acquires an amplitude equalizing tap coefficient which determines filter characteristics, applies filtering processing based on the filter characteristics determined by the amplitude equalizing tap coefficient to a signal output from the digital filter (42), and outputs a signal obtained by the filtering processing;
a characteristics estimation unit (50b) which detects a deviation of an amplitude within the frequency band occupied by the signal output from the amplitude equalizing digital filter (50a), generates the amplitude equalizing tap coefficient based on the detected deviation, and output the generated amplitude equalizing tap coefficient to the amplitude equalizing digital filter (50a);
a D/A converter (44) which converts a signal output from the amplitude equalizing digital filter (50a) into an analog signal;
a transmission unit which transmits a signal output from the D/A converter (44);
a channel acquisition unit (48a) which acquires a channel code which identifies a frequency band occupied by the digital television broadcasting signal;
a characteristics calculation unit (48b) which obtains, based on the channel code which is acquired by the channel acquisition unit, filter characteristics in which an attenuation frequency band is provided in a frequency band which is different from a plurality of designated frequency bands each of which is designated by the channel code; and
a characteristics setting unit (48c) which generates the tap coefficient based on the filter characteristics obtained by the characteristics calculation unit (48b) and outputs the tap coefficient which is generated to the digital filter (42).

2. The digital television broadcasting signal relay transmitter apparatus (7) according to Claim 1, wherein
the reception unit includes:
a reception antenna (10) which receives the digital television broadcasting signal; and
a first frequency converter (16a) which converts a frequency of a signal received by the reception antenna (10) and outputs a signal which is converted; and
the transmission unit includes:
a second frequency converter (22a) which converts a frequency of a signal output from the D/A converter; and
transmission means which transmits a signal output from the second frequency converter; and
wherein
the first frequency converter (16a) acquires a first local oscillator signal for performing frequency conversion processing and converts a frequency of the signal received by the reception antenna (10) based on the first local oscillator signal, and
the second frequency converter (22a) acquires a second local oscillator signal for performing frequency conversion processing and converts a frequency of the signal output from the D/A converter (44) based on the second local oscillator signal.

3. The digital television broadcasting signal relay transmitter apparatus (7) according to Claim 2, comprising:
a local oscillator (46) which outputs the first local oscillator signal,
wherein the characteristics calculation unit (48b) determines a frequency of the first oscillator signal output from the local oscillator (46) based on a frequency band designated by the channel code which is acquired by the channel acquisition unit (48a).

4. The digital television broadcasting signal relay transmitter apparatus (7) according to Claim 2, wherein
the frequency of the first local oscillator signal and the frequency of the second local oscillator signal are set to an identical frequency,
the frequency band occupied by the digital television broadcasting signal received by the reception antenna (10) and the frequency band occupied by the digital television broadcasting signal transmitted by the transmission means are set to an identical frequency band, and
the digital television broadcasting relay transmitter apparatus (7) is applied to a digital television broadcasting system which adopts an SFN system.

5. The digital television broadcasting signal relay transmitter apparatus (7) according to Claim 2, wherein
the frequency of the first local oscillator signal and the frequency of the second local oscillator signal are set to different frequencies, and
the frequency band occupied by the digital television broadcasting signal received by the reception antenna (10) and the frequency band occupied by the digital television broadcasting signal transmitted by the transmission means are set to different frequency bands.

6. The digital television broadcasting signal relay transmitter apparatus (7) according to Claim 1, wherein
the transmission unit includes a transmission antenna (28).

7. The digital television broadcasting signal relay transmitter apparatus (7) according to Claim 1, wherein
the transmission unit transmits the signal output from the D/A converter (44) to a transmission cable.

8. The digital television broadcasting signal relay transmitter apparatus (7) according to Claim 7, wherein
the transmission unit transmits the signal output from the D/A converter (44) to a transmission cable of a CATV system.

## Patentansprüche

1. Digitalfernsehsignal-Relaistransmittervorrichtung (7) zur Durchführung der Relaisübertragung eines digitalen Fernsehsignals in einem FernsehÜbertragungsfrequenzband, mit:
einer Empfangseinheit, welche das digitale Fernsehsignal empfängt;
einem A/D-Wandler (40), der ein von der Empfangseinheit empfangenes Signal in ein digitales Signal umwandelt und das digitale Signal ausgibt;
einem digitalen Filter (42), das einen Filtercharakteristika bestimmenden Abgriffskoeffizienten erfasst, auf der Grundlage der durch den Abgriffskoeffizienten bestimmten Filtercharakteristika eine Filterungsverarbeitung eines Ausgangssignals des A/D-Wandlers (40) durchführt, und ein durch die Filterungsverarbeitung erhaltenes Signal ausgibt;
einem digitalen Amplitudenentzerrungsfilter (50a), das einen Filtercharakteristika bestimmenden Amplitudenentzerrungsabgriffskoeffizienten erfasst, auf der Grundlage der durch den Amplitudenentzerrungs-abgriffskoeffizienten bestimmten Filtercharakteristika eine Filterungsverarbeitung eines Ausgangssignals des digitalen Filters (42) durchführt, und ein durch die Filterungsverarbeitung erhaltenes Signal ausgibt;
einer Charakteristika-Schätzeinheit (50b), die eine Abweichung einer Amplitude innerhalb des von dem Ausgangssignal des digitalen Amplitudenentzerrungsfilter (50a) eingenommenen Frequenzbandes erkennt, den Amplitudenentzerrungsabgriffskoeffizienten auf der Grundlage der erkannten Abweichung erzeugt, und den erzeugten Amplitudenentzerrungsabgriffskoeffizienten an das digitale Amplitudenentzerrungsfilter (50a);
einem D/A-Wandler (44), der ein Ausgangssignal des digitalen Amplitudenentzerrungsfilter (50a) in ein Analogsignal umwandelt;
einer Übertragungseinheit, die ein Ausgangssignal des D/A-Wandlers (44) überträgt;
einer Kanalerfassungseinheit (48a), die einen Kanalcode erfasst, der ein von dem digitalen Fernsehsignal eingenommenes Frequenzband identifiziert;
einer Charakteristika-Berechnungseinheit (48b), die auf der Grundlage des von der Kanalerfassungseinheit erfassten Kanalcodes Filtercharakteristika erhält, wobei das Dämpfungsfrequenzband in einem Frequenzband vorliegt, das von mehreren designierten Frequenzbändern verschieden ist, die jeweils durch den Kanalcode angegeben sind; und
einer Charakteristika-Einstelleinheit (48c), welche den Abgriffskoeffizienten auf der Grundlage der durch die Charakteristika-Berechnungseinheit (48b) erhaltenen Filtercharakteristika erzeugt und den erzeugten Abgriffskoeffizienten an das digitale Filter (42) ausgibt.

2. Digitalfernsehsignal-Relaistransmittervorrichtung (7) nach Anspruch 1, bei welcher
die Empfangseinheit aufweist:
eine Empfangsantenne (10), die das digitale Fernsehsignal empfängt; und
einen ersten Frequenzwandler (16a), der eine Frequenz eines von der Empfangsantenne (10) empfangenen Signals umwandelt und ein umgewandeltes Signal ausgibt; und
die Übertragungseinheit aufweist:
einen zweiten Frequenzwandler (22a), der eine Frequenz eines Ausgangssignals des D/A-Wandlers umwandelt; und
eine Übertragungseinrichtung, die ein Ausgangssignal des zweiten Frequenzwandlers überträgt; und
wobei
der erste Frequenzwandler (16a) ein erstes lokales Oszillatorsignal zur Durchführung der Frequenzumwandlungsverarbeitung erfasst und eine Frequenz des von der Empfangsantenne (10) empfangenen Signals auf der Grundlage des ersten lokalen Oszillatorsignals umwandelt; und
der zweite Frequenzwandler (22a) ein zweites lokales Oszillatorsignal zur Durchführung der Frequenzumwandlungsverarbeitung erfasst und eine Frequenz des Ausgangssignals des D/A-Wandlers (44) auf der Grundlage des zweiten lokalen Oszillatorsignals umwandelt.

3. Digitalfernsehsignal-Relaistransmittervorrichtung (7) nach Anspruch 2, mit:
einem lokalen Oszillator (46), welcher das erste lokale Oszillatorsignal ausgibt;
wobei die Charakteristika-Berechnungseinheit (48b) eine Frequenz des von dem lokalen Oszillator (46) ausgegebenen ersten Oszillatorsignals auf der Grundlage eines Frequenzbandes bestimmt, welches durch den von der Kanalerfassungseinheit (48a) erfassten Kanalcode angegeben ist.

4. Digitalfernsehsignal-Relaistransmittervorrichtung (7) nach Anspruch 2, bei welcher
die Frequenz des ersten lokalen Oszillatorsignals und die Frequenz des zweiten lokalen Oszillatorsignals auf eine identische Frequenz eingestellt sind,
das von dem digitalen Fernsehsignal, welches von der Empfangsantenne (10) empfangen wird, eingenommene Frequenzband und das von dem digitalen Fernsehsignal, welches von der Übertragungseinrichtung übertragen wird, eingenommene Frequenzband auf ein identisches Frequenzband eingestellt sind, und
die Digitalfernsehsignal-Relaistransmittervorrichtung (7) in einem Digitalfernsehsystem Anwendung findet, das ein SFN-System verwendet.

5. Digitalfernsehsignal-Relaistransmittervorrichtung (7) nach Anspruch 2, bei welcher
die Frequenz des ersten lokalen Oszillatorsignals und die Frequenz des zweiten lokalen Oszillatorsignals auf verschiedene Frequenzen eingestellt sind, und
das von dem digitalen Fernsehsignal, welches von der Empfangsantenne (10) empfangen wird, eingenommene Frequenzband und das von dem digitalen Fernsehsignal, welches von der Übertragungseinrichtung übertragen wird, eingenommene Frequenzband auf verschiede Frequenzbänder eingestellt sind.

6. Digitalfernsehsignal-Relaistransmittervorrichtung (7) nach Anspruch 1, bei welcher
die Übertragungseinheit eine Übertragungsantenne (28) aufweist.

7. Digitalfernsehsignal-Relaistransmittervorrichtung (7) nach Anspruch 1, bei welcher
die Übertragungseinheit das Ausgangssignal des D/A-Wandlers (44) an ein Übertragungskabel überträgt.

8. Digitalfernsehsignal-Relaistransmittervorrichtung (7) nach Anspruch 7, bei welcher
die Übertragungseinheit das Ausgangssignal des D/A-Wandlers (44) an ein Übertragungskabel eines CATV-Systems überträgt.

## Revendications

1. Un appareil (7) émetteur relais de signal de radiodiffusion télévisuelle numérique pour effectuer la transmission relais d'un signal de radiodiffusion télévisuelle numérique dans une bande de fréquence de radiodiffusion télévisuelle, comprenant :
une unité de réception qui reçoit le signal de radiodiffusion télévisuelle numérique ;
un convertisseur A/N (40) qui convertit un signal reçu par l'unité de réception en un signal numérique et ressort le signal numérique ;
un filtre numérique (42) qui acquiert un coefficient de filtre qui détermine des caractéristiques de filtre, le filtre numérique (42) applique un traitement de filtrage basé sur les caractéristiques de filtre déterminées par le coefficient de filtre à un signal sorti du convertisseur A/N (40), et le filtre numérique (42) ressort un signal obtenu par le traitement de filtrage ;
un filtre numérique égalisateur d'amplitude (50a) qui acquière un coefficient de filtre d'égalisation d'amplitude qui détermine les caractéristiques de filtre, le filtre numérique égalisateur d'amplitude (50a) applique un traitement de filtrage basé sur les caractéristiques de filtre déterminées par le coefficient de filtre à un signal sorti du filtre numérique (42), et le filtre numérique égalisateur d'amplitude (50a) ressort un signal obtenu par le traitement de filtrage ;
une unité d'estimation de caractéristiques (50b) qui détecte un écart d'une amplitude à l'intérieur de la bande de fréquence occupée par le signal sorti du filtre numérique égalisateur d'amplitude (50a), l'unité d'estimation de caractéristiques (50b) génère le coefficient de filtre d'égalisation d'amplitude basé sur la déviation détectée, et l'unité d'estimation de caractéristiques (50b) ressort le coefficient de filtre d'égalisation d'amplitude généré à destination du filtre numérique égalisateur d'amplitude (50a) ;
un convertisseur N/A (44) qui convertit un signal sorti du filtre numérique égalisateur d'amplitude (50a) en un signal analogique ;
une unité de transmission qui transmet un signal sorti du convertisseur N/A (44) ;
une unité d'acquisition de canal (48a) qui acquiert un code de canal qui identifie une bande de fréquence occupée par le signal de radiodiffusion télévisuelle numérique ;
une unité de calcul de caractéristiques qui obtient, sur la base du code de canal qui est acquis par l'unité d'acquisition de canal, des caractéristiques de filtre dans lesquelles une bande de fréquence d'atténuation est procurée dans une bande de fréquence qui est différente d'une pluralité de bandes de fréquences désignées dont chacune est désignée par le code de canal ;
et
une unité de réglage de caractéristiques (48c) qui génère le coefficient de filtre sur la base des caractéristiques de filtre obtenues par l'unité de calcul de caractéristiques (48b) et ressort le coefficient de filtre qui est généré par le filtre numérique (42).

2. L'appareil (7) émetteur relais de signal de radiodiffusion télévisuelle numérique selon la revendication 1, dans lequel
l'unité de réception inclut :
une antenne de réception (10) qui reçoit le signal de radiodiffusion télévisuelle numérique ; et
un premier convertisseur de fréquence (16a) qui convertit une fréquence d'un signal reçu par l'antenne de réception (10) et ressort un signal qui est convertit ; et
l'unité de transmission inclut :
un second convertisseur de fréquence (22a) qui convertit une fréquence d'un signal sorti du convertisseur N/A ; et
des moyens de transmission qui transmettent un signal sorti du second convertisseur de fréquence ; et
dans lequel
le premier convertisseur de fréquence (16a) acquiert un premier signal d'oscillateur local pour effectuer le traitement de conversion de fréquence et converti la fréquence du signal reçu par l'antenne de réception (10) basée sur le premier signal d'oscillateur local, et
le second convertisseur de fréquence (22a) acquiert un second signal d'oscillateur local pour effectuer le traitement de conversion de fréquence et converti la fréquence du signal sorti du convertisseur N/A (44) basé sur le second signal d'oscillateur local.

3. L'appareil (7) émetteur relais de signal de radiodiffusion télévisuelle numérique selon la revendication 2, comprenant :
un oscillateur local (46) qui ressort le premier signal d'oscillateur local,
dans lequel l'unité de calculs de caractéristiques (48b) détermine une fréquence du premier signal d'oscillateur sorti de l'oscillateur local (46) basé sur une bande de fréquence désignée par le code de canal qui est acquit par l'unité d'acquisition de canal (48a).

4. L'appareil (7) émetteur relais de signal de radiodiffusion télévisuelle numérique selon la revendication 2, dans lequel
la fréquence du premier signal d'oscillateur local et la fréquence du second signal d'oscillateur local sont réglés sur une même fréquence,
la bande de fréquence occupée par le signal de radiodiffusion télévisuelle numérique reçu par l'antenne de réception (10) et la bande de fréquence occupée par le signal de radiodiffusion télévisuelle numérique transmis par les moyens de transmission sont réglés sur une bande de fréquence identique, et
l'appareil (7) émetteur relais de signal de radiodiffusion télévisuelle numérique est appliqué à un système de radiodiffusion télévisuelle numérique qui adopte un système SFN.

5. L'appareil (7) émetteur relais de signal de radiodiffusion télévisuelle numérique selon la revendication 2, dans lequel
la fréquence du premier signal d'oscillateur local et la fréquence du second signal d'oscillateur local sont réglés sur différentes fréquences,
la bande de fréquence occupée par le signal de radiodiffusion télévisuelle numérique reçu par l'antenne de réception (10) et la bande de fréquence occupée par le signal de radiodiffusion télévisuelle numérique transmis par les moyens de transmission sont réglés sur différentes bande de fréquence.

6. L'appareil (7) émetteur relais de signal de radiodiffusion télévisuelle numérique selon la revendication 1, dans lequel
l'unité de transmission inclut une antenne de transmission (28).

7. L'appareil (7) émetteur relais de signal de radiodiffusion télévisuelle numérique selon la revendication 1, dans lequel
l'unité de transmission transmet le signal sorti du convertisseur N/A (44) à un câble de transmission.

8. L'appareil (7) émetteur relais de signal de radiodiffusion télévisuelle numérique selon la revendication 7, dans lequel
l'unité de transmission transmet le signal sorti du convertisseur N/A (44) à un câble de transmission d'un système CATV.
